# EUROPÄISCHE PATENTSCHRIFT

(11) **EP 1 944 666 B1**
(45) Veröffentlichungstag und Bekanntmachung des Hinweises auf die Patenterteilung: **21.04.2010**
(21) Anmeldenummer: 08000292.6
(22) Anmeldetag: 09.01.2008
(51) Int. Cl.: G05B 19/042

(54) **Elektronische Schaltvorrichtung und Verfahren zur Schaltung autonomer Interventionsmittel zur automatisierten Behebung von Betriebsstörungen**
Electronic switching device and method for switching autonomous intervention agent for automatic fixing of malfunctions
Dispositif de commutation électronique et procédé de commutation de moyens d'intervention autonomes pour la résolution automatisée de pannes de fonctionnement

(30) Priorität: 09.01.2007 WO PCT/EP2007/005179
(43) Veröffentlichungstag der Anmeldung: 16.07.2008
(73) Patentinhaber: Swiss Reinsurance Company, 8002 Zürich (CH)
(72) Erfinder: Eck, Vincent, 75017 Paris (FR)
(74) Vertreter: Braun, André jr.

(56) Entgegenhaltungen:
- WO-A-01/79948
- WALCZAK T A: "EMERGENCY PLC CONTROLLED SHUTDOWN" ADVANCES IN INSTRUMENTATION AND CONTROL, INSTRUMENT SOCIETY OF AMERICA, RESEARCH TRIANGLE PARK, US, Bd. 45, Nr. PART 04, 1. Januar 1990 (1990-01-01), Seiten 1711-1725, XP000172109 ISSN: 1054-0032

## Beschreibung

Die vorliegende Erfindung betrifft ein System und entsprechendes Verfahren zur elektronischen Schaltung zweier autonomer Notfallinterventionssysteme zur automatisierten Behebung von Betriebsstörungen von dezentralisiert angeordneten Anlagen, wobei mittels einer Sensorik einer Anlage ein Betriebsstörungsereignis der Anlage detektiert wird und wobei basierend auf übertragenen Betriebsstörungsparameter mittels des ersten Notfallinterventionssystem dedizierte Interventionsmittel betriebs- und störungsspezifisch selektiert und aktiviert werden, mittels welchen Interventionsmittel die Betriebsstörung der Anlage behoben wird.

### Stand der Technik

Betriebsausfälle und Betriebseinschränkungen von einzelnen Vorrichtungen grosser komplexer Systeme, aber auch Betriebsstörungen ganzen Anlagen kann heute ungeahnte Auswirkungen zeitigen, nicht nur für den betroffenen Betrieb, sondern für damit verbundene oder davon abhängige Betriebe. Ein typisches Beispiel dafür ist der Brand eines Chipherstellungsbetriebes eines Asiatischen Herstellers vor wenigen Jahren. Der Betrieb unterschiedlichster weiterer Herstellungsanlagen im Hardwarebereich war betroffen bzw. lahmgelegt. Diese zum Teil globalen Abhängigkeiten beim Funktionieren von Betrieben haben ein erhöhtes Bedürfnis nach schneller, automatisierter Betriebsstörungserkennung und -früherkennung sowie der automatisierten Betriebsstörungsbehebung aufkommen lassen. Zur differenzierten Signalerzeugung zur Aktivierung der notwendigen Interventionsmittel war jedoch menschliche Interaktion in vielen Bereichen technischen Abläufen und Betrieben lang Zeit notwendige Voraussetzung, sobald die Komplexität der beteiligten Vorrichtungen, erfassten Messparametern oder zu kontrollierenden Prozessen und Interaktionen mit der Umwelt ein gewisses Mass überschritt. Insbesondere bei der Steuerung, Kontrolle und Überwachung dynamischer und/oder nicht-linearer Prozesse entzog sich eine Automatisierung dem Stand der Technik. Häufig war es insbesondere die Nichtlinearität, welche konventionellen Vorrichtungen den Boden zur Automatisierung entzog. Viele technische Umsetzungen unterschiedlichster Arten von Frühwarn-Vorrichtungen, Bild- und/oder Mustererkennungsvorrichtungen (Pattern-Recognition), insbesondere bei analogen Meßdaten oder bei notwendiger Selbstorganisierung der Vorrichtung, sind in den meisten Fällen im Stand der Technik noch heute nicht befriedigend gelöst sind. Fast alle natürlichen Prozesse besitzen mindestens teilweise einen nichtlinearen Ablauf und tendieren ausserhalb eines schmalen linearen Gleichgewichtbereichs zu exponentiellem, mit technischen Mittel kaum zu kontrollierenden Verhalten. Man denke dabei nur an das amerikanischen Space Shuttle Challenger (OV-99) Unglück bei der NASA vom 28. Januar 1986. Das Space Transportation System STS-51-L brach wegen einer Betriebsstörung bei einem Dichtungsring einer Feststoffraketen (Booster) in nur 73 Sekunden auseinander, ohne dass eine Interaktion überhaupt möglich war. Eine effiziente und zuverlässig funktionierende Frühwarnsignalerzeugung und automatisierte Betriebsstörungsbehebung kann für viele technischen Einrichtungen in allen möglichen Bereichen wie gezeigt überlebenswichtig sein. Dies geht von komplexen technischen Vorrichtungen wie Flugzeugen, Robotern, Fabrikationsstrassen etc., mit jeweils vielen tausend Sensoren und Meßsignalen, bis zu Überwachungs-, und Steuersystemen basierend auf unkontrollierbaren Umwelteinflüssen, wie meteorlogischen (Stürme, Hurrikans, Überschwemmungen), geologischen (Erdbeben), wirtschaftbedingten (Börse) Einflüssen.

Die zugrundeliegenden technischen Probleme reichen vom differenzierten , automatisierten Erfassen der Messparameter, ihrer spezifischen Selektion und Filtern und Buffern der Daten, der Real-Time-Gewichtung, Detektion von Korrelationen, der Analyse und dem Triggern bis zur Signalgenerierung, selektiven Aktivierung bzw. Freischaltung von entsprechenden Vorrichtungen sowie eventuellen Rückkoppeln zeitabhängigen, dynamischer Wirkungen der Vorrichtungen. Entzieht sich ein derartiges technische Probleme dem Stand der Technik, spielen zwangsläufig menschliche Interaktion, besonders an den Schnittstellen zwischen zwei technischen Einheiten eine Schlüsselrolle. Die nicht-lineare neuronale Struktur des menschlichen Hirns war lange Zeit an die ebenfalls häufig nicht-linearen Prozesse bei der Problemerkennung, Überwachung, Signalerzeugung oder technischen Abstimmung der Vorrichtungen besser angepasst, als entsprechende technische, automatisierte Vorrichtungen. Heutzutage stößt die menschliche Interaktion jedoch in vielen Bereichen an Grenzen und Probleme, ohne dass der Stand der Technik entsprechenden Ersatz bereit hätte. Zum einen hat die Menge von erfassten Messparametern durch Sensoren, Bilderfassungseinheiten aber auch von vorhandenen, historischen Daten in den letzten Jahren in unvorhersehbarem Ausmass zugenommen. Sie ist nicht vergleichbar mit der Datenmenge, wie sie etwa vor 10 Jahren noch verfügbar war. Häufig erlaubt diese grosse Menge der Messparameter ein gesamtheitliches, zuverlässiges und/oder reproduzierbares Überwachen durch einen Menschen nicht mehr. Zum anderen sind die für die Systeme notwendigen Reaktionszeiten für viele Anwendungen derart kurz geworden, dass eine menschliche Interaktion bei diesen Systemen allein durch die kurzen Reaktionszeiten und/oder die Menge der erfassten Messparameter nicht mehr genügt. Bei Systemen mit einer Real-Time Reaktionszeit als notwendige Voraussetzung für einen optimalen Betrieb, wie z.B. Steuerautomatik und Robotik wird das Gesagte offensichtlich. Einhergehend mit dem Betrieb sollte die Signalerzeugung falls notwendig auch eine dynamische und/oder rückgekoppelte Anpassung des Systems, des Betriebs und/oder der Signalerzeugung ermöglichen. Mittels menschlicher Interaktionen ist dies in vielen technischen Anwendungsbereichen nicht mehr möglich. Die menschliche Interaktion hat bei komplexen Systemen zudem weiter den Nachteil, dass ihre Fehleranfälligkeit in Abhängigkeit der Komplexität nicht linear steigt. Das Verhalten bzw. der Betrieb des Systems wird unvorhersagbar. Unerwarteten Betriebsunterbrüche, Systemabstürze oder Systemcrashes sind die Folge. Dazu gibt es gehäuft Beispiele in neuerer Zeit, wie z.B. systemerzeugte Betriebsunterbrüche bei mit menschlicher Interaktion gekoppelten Systemen. So beispielsweise trotz allen Notfallinterventionsvorrichtungen und -systemen unvorhersehbare Flugzeugabstürze (z.B. MD11-Crash der Swissair vor Halifax am 03.11.98 oder das Flugunglück bei Überlingen im Juli 2002), Börsencrashes mit weltweitem Kollaps von Finanzsystemen und Finanzinstituten etc. etc.

Die oben erwähnten Nachteile haben in der Industrie ein verstärktes Bedürfnis nach Technisierung und Automatisierung mittels effizienten Signalerzeugungs-, Alarm-, Kontroll- und/oder Betriebsinterventionssystemen oder -vorrichtungen geschaffen, welche solche Ereignisse bzw. deren Auswirkung wirksam abfangen können, ohne dass menschliche Interaktion notwendig wäre. Die Vorrichtungen sollten die Möglichkeit zur dynamischen Selbstorganisation auf veränderte Bedingungen oder veränderte technische Wirkungen von Systemen umfassen. Die differenzierte Messparametererfassung und Signalerzeugung bei entsprechenden Interventionsvorrichtungen zur Behebung von Betriebsstörung und zur dynamischen Aktivierung oder zur Signalübermittlung sollte dabei eine möglichst kurze Reaktionszeit, oder gar eine Reaktionszeit in Realtime aufweisen. Es ist für den Fachmann klar, dass die reine softwäre-mässige Implementierung (wo überhaupt möglich) und/oder Erhöhung der verfügbaren Prozessorleistung (Computing-Power) bei den meisten Systemen zur technischen Umsetzung der Automatisierung nicht reicht. Gerade bei den erwähnten komplexen System mit einem nicht-linearen Prozesshintergrund und einer grossen Menge anfallender Messdaten mit unbekannten Abhängigkeiten und Korrelationen entzieht sich die Technisierung und Automatisierung der blossen, softwarebasierten Implementierung auf einem Rechner. Die technische Umsetzung ist deshalb hier in den wenigsten Fällen für den Fachmann ohne Hilfe in trivialer Weise auffindbar. Dies selbst wenn die verwendeten, einzelnen, technischen Vorrichtungselemente im Stand der Technik bekannt sein sollten. Dies betrifft im speziellen auch die Wirkungsweise dieser Vorrichtungen. Prozessabläufe sind in Wechselwirkung mit komplexen Systemen meist nicht oder schwer simulierbar, so dass das technische Zusammenwirken der benutzen Vorrichtungselemente, auch wenn diese einzeln bekannt oder trivial sein mögen, in ihrer Wirkung und Interaktion auf die Prozessabläufe bzw. die gesteuerten Vorrichtungen für den Fachmann nicht vorhersehbar und nicht trivial sind. Umgekehrt gesagt, da die Wirkung einer Vorrichtung nicht vorhersehbar ist, ist meist die technische Realisierung bzw. Verknüpfung der Vorrichtungselemente, der Selektion der beeinflussenden Parameter etc. bei solchen Prozessen für den Fachmann nicht vorherzusehen und deshalb nicht trivial.

Betriebsstörungen und Betriebsunterbrüche bei sensiblen, automatisierten Systemen sollen mit der vorliegenden Vorrichtung verhindert oder zumindest schnellst möglich detektierbar und behebbar sein. Meist ist es eine notwendige Bedingung für den Betrieb, dass bei solchen Systemen die Möglichkeit des Eintretens von Betriebsstörungen frühzeitig im Sinne eines Frühwarnsystem erkannt und präventiv entgegengewirkt werden. Dabei kann bei solchen Interventionsvorrichtungen nicht nur die Art der Interventionsmittel (z.B. Katastropheneinsatzmittel wie Bau- und Konstruktionsvorrichtungen, Alarmvorrichtungen wie Sirenenregelvorrichtungen, Betriebsstörungsmittel wie Zufuhrvorrichtungen oder Zufuhrregelvorrichtungen (Wasserregelwerke, Treibstoff und Schmierregelwerke, Kanalisationssysteme mit Pumpen- und Schleusenregelvorrichtungen etc.)) eine Rolle spielen, sondern auch die Art, wie die durch die Erfassungsvorrichtungen und Detektionsvorrichtungen gemessenen Kontrollparameter verarbeitet und zur Steuerung von Aktivierungseinheiten für die Interventionsmittel oder Alarmmittel technisch umgesetzt werden. Es ist gerade die technische Umsetzung, die bei heutigen komplexen Systemen mit ebenso komplexen Abhängigkeiten zu kaum überwindbaren technischen Probleme führt.

Eine weitere Schwierigkeit liegt darin, dass die verfügbare Datenmenge aus unterschiedlichsten heterogenen, analogen oder digitalen Erfassungsvorrichtungen und Detektionsvorrichtungen stammen kann, wie beispielsweise Windgeschwindigkeitssensoren, Satellitenbilder, Wasserstandsensoren, Wasser- und Windtemperatursensoren etc.. Ebenso finden sich technische Probleme darin, dass die genannten Signalerzeugungsvorrichtungen, Alarm-, Kontroll- und/oder Betriebsinterventionsvorrichtungen in ihrer Funktion meist nicht nur mit nicht-linearen Prozessen der Umwelt, sondern auch mit dynamisch sich veränderten Prozessen anderer automatisierter oder halb automatisierter Prozesse von Vorrichtungen interferieren oder korrelieren. Die Interaktion selbst kann durchaus auch aus Prozessen z.B. der Börse, Versicherungsindustrie oder von Schadensdeckungs- und Risikokontrollsystemen stammen, die an der Grenze der Patentierung liegen, da sie üblicherweise zu den Geschäftsmethoden gezählt werden. Die differenzierte Signalerzeugungs- und Steuer-/Kontrollvorrichtung selbst ist jedoch stets technisch und wegen ihrer Interaktion in den meisten Fällen für den Fachmann nicht trivial, da er aus dem Funktionieren der möglicherweise bekannten, einzelnen Komponenten der Vorrichtung nicht oder nur schwer auf die Wirkungsweise der Vorrichtung bei Interaktion mit den nicht-linearen Prozessen schliessen kann, oder umgekehrt das notwendige Zusammenwirken der einzelnen Komponenten für die Vorrichtung in trivialer Weise aus den Prozessen schliessen kann.

Gekoppelte oder nicht gekoppelte Betriebsstörungsvorrichtungen, Interventionssysteme und entsprechend integrierbare Signalerzeugungs- oder Alarmvorrichtungen ebenso wie Notfallkontroll- oder Betriebsstörungsvorrichtungen im Stand der Technik in unterschiedlichen Variationen bekannt. Ebenfalls bekannt ist die Unterteilung von Betriebsstörungsbehebungen z.B. bei mindestens teilweise geldwertbasierten Interventionssystemen Als Beispiel kann die internationale Patentschrift WO 2005/091741 A2/A3 gelten. Mittels einer gesteuerten Segmentierung der Interventionen bei Betriebsstörungen kann die Sicherheit und Effizienz der beteiligten Systeme verbessert werden. Die internationale Patentschrift WO 2006/083791 A2/A3 zeigt zur Betriebssicherung eine andere Art von Segmentierung der Interventionen bei Betriebsstörungen, indem diese vom System mindestens teilweise automatisiert auf Dritte übertragen wird, während entsprechende Verrechnungsbelege generiert und elektronisch zugeordnet werden. Ein weiteres Beispiel einer ähnlichen automatisierten Segmentierung zeigt die internationale Patentanmeldung PCT/US04/37000 (US 2007/0112604 A1). Auch hier generiert das System die Segmentierung und ordnet sie entsprechend zu. Schlussendlich zeigt die internationale Patentschrift WO 00/65470 A2 ein System, welches eine automatisierte, variable Segmentierung und Kopplung zwischen Notfallinterventionsvorrichtungen erlaubt. Es wäre dabei sogar möglich, die Segmentierung dynamisch bei sich ereignenden Bentriebsstörungen zu verändern. Weiter ist z.B. auch der Einbau einer geeigneten Sensorik und Kontrollvorrichtungen direkt bei der Betriebsanlage mit Übermittlung von Messsignalen an eine zentrale Kontrollvorrichtung bekannt. Z.B. ist bekannt, zur automatisierten Alarmauslösung von diesen Kontrollvorrichtungen ortabhängige elektrische Signale periodisch oder auf Request (Anfrage) auf eine zentrale Einheit zu übermitteln. Die internationale Patentschrift WO 2004/111962 A2/A3 offenbart ein solche Alarmvorrichtung, wobei mittels Erfassungsvorrichtungen Messparameter erfasst und auf eine Zentraleinheit übermittelt wird, welche bei Betriebsstörungen automatisiert ein Alarmsignal erzeugt und zu den entsprechenden Betriebsinterventionsmittel überträgt. Die deutsche Patentschrift DE 199 51 076 A1 zeigt Signalerzeugungs- und Aktivierungsvorrichtung, bei welcher in Notsituationen Signale an eine zentrale Einheit übermittelt werden, welche entsprechende Steuerbefehle zur Aktivierung von Kommunikations- und Alarmvorrichtungen im Motorfahrzeug generiert. Ähnliches ist bei Industrieanlagen aller Art bekannt. Der Betrieb von technischen Anlagen sind einer Vielzahl von möglichen Betriebsstörungen oder Risikoereignissen, welche zu Betriebsstörungen führen ausgesetzt. Beispielsweise verursacht unterschiedliche Nutzung oder Nutzung an unterschiedlichen Orten oftmals unterschiedliche Arten von Betriebsstörungen und/oder Wahrscheinlichkeiten für Betriebsstörungen. Beispiele für solche Betriebsstörungen sind Unfälle, Verschleiss und/oder Abnutzung aufgrund von Umwelteinflüssen (z.B. Hagel etc.) und/oder Gefahren für Personen und Eigentum aufgrund von Verbrechen, wie z.B. Diebstahl, Einbrüchen, Vandalismus und tätliche Angriffe. Neben den bereits angeführten Ursachen für Betriebsstörungen, kann die Nutzung und Betrieb von Anlagen und Vorrichtungen auch Risiken für Personen und Eigentum aufgrund von terroristischen Aktivitäten oder Kampfhandlungen mit sich bringen, z.B. in geographischen Regionen mit militärischen oder politischen Konflikten. Ebenfalls beeinflussen die Eigentümer und Betreiber mindestens teilweise die Wahrscheinlichkeit für Betriebsstörungen beim Betrieb von Vorrichtungen. Ein Eigentümer und Betreiber kann die Wahrscheinlichkeit für Betriebsstörungen durch sorgfältiges Betreiben und richtiges Beurteilen minimieren. Zusätzlich zu den Auswirkungen der Betriebsstörungen für den Eigentümer und/oder Betreiber kann jedoch die Betriebsstörung einer Vorrichtung auch dritte Parteien betreffen, die eine technische oder wirtschaftliche Abhängigkeit oder zu seinem Betrieb haben. Oftmals haben derartige, in zweiter Linie betroffene Parteien wenig oder keine Kontrolle darüber wie ein Betreiber die Anlage oder Vorrichtung betreibt, obwohl diese Parteien durch die Nutzung des Fahrzeuges stark betroffen sein können. Die dynamische Signalgenerierung zur Überwachung und Übertragung auf andere Einheiten und Anpassung dieser Einheiten zeigt z.B. die internationale Patentschrift WO 2007/133991 A2. Die in der Vorrichtung dediziert installierten Detektionsvorrichtungen übermitteln bei Eintreten von Triggerevents Signaldaten auf eine Aktivierungsvorrichtung. Diese kann u.a. auch teilweise oder nicht automatisierte Versicherungssysteme umfassen. Ebenfalls bekannt bei Betriebsstörungen ist die Interaktion dynamisch gesteuerter, benutzerspezifische Signaferzeugungsvorrichtungen mit teilweise oder nicht automatisierten Schalt- oder Aktivierungsvorrichtungen, welche mindestens ein manetar-basierten Speicher umfassen können. Als Beispiel des Standes der Technik kann die internationale Patentschrift WO 97/27561 A2/A3 (vgl. EP0877992) gelten. Eines der Grundprobleme all dieser Systeme liegt darin, dass Automatisierungen und/oder automatisierte Steuerungen der Kontroll- und Betriebsinterventionssysteme meist selbst sehr instabil und störanfällig sind. Dies liegt häufig auch in der grossen Komplexität der zugeordneten technischen Anlagen bzw. ihrer Wechselwirkung mit der Umwelt. Serienausfälle und/oder korrelierte Betriebsausfälle oder Störungen z.B. durch Umwelteinflüsse sind schwer oder gar nicht im Voraus zu detektieren. Das Dokument "Emergency PLC Controlled Shutdown" von T.A. Walczak zeigt (ISA, 1990 - Paper #90-609 0065-2814/90/1711-1725/$0) zeigt ein erstes System mit einem zweiten BackupSystem bei Betriebsstörungen, wobei eine RPU-Einheit die Daten und Betriebsmodus des ersten Systems mit dem zweiten Backupsystem synchronisiert und bei Bedarf umschaltet. WO 01 /79948 A1 offenbart ein Überwachungssystem für eine MSR-Enrichtung (Messen, Steuern, Regein). Das System ist derart ausgestaltet, dass das Auftreten einer Fehlfunktion bei der MSR-Einrichtung nicht ummittelbar dazu führt, dass das Überwachungssystem in einen sicheren Zustand übergeht, sondern den Zählerstand eines Zählers erhöht. Überschreitet der Zählerstand einen gewissen Wert, geht das Überwachungssystem in einen sicheren Zustand über.

### Technische Aufgabe

Es ist eine Aufgabe dieser Erfindung eine elektronische Schaltvorrichtung und Verfahren für Notfallvorrichtung zur automatisierten Behebung von Betriebsstörungen vorzuschlagen, welche die oben erwähnten Nachteile nicht aufweisen. Insbesondere soll es möglich sein mittels angepasster Sensorik des Notfallinterventionssystems sich ereignende Betriebsstörungen automatisch zu detektieren und mittels einer Aktivierungsvorrichtung der elektronischen Schaltvorrichtung basierend für die detektierte Betriebsstörung dedizierte Aktivierungssignaldaten automatisch zu generieren und auf spezifisch selektierte Interventionsmittel zu übertragen. Mittels den durch das Notfallinterventionssystem spezifisch selektierten Interventionsmittel soll die Betriebsstörung effizient und mit hoher Betriebssicherheit und ohne Interaktion durch den Benutzer behebbar sein. Insbesondere soll die elektronische Schaltvorrichtung Vorteile an Geschwindigkeit, Voraussagbarkeit des Betriebsverhaltens und Einsparungen im Zeitaufwand aufweisen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zur elektronischen Schaltung zweier autonomer Notfallinterventionssysteme zur automatisierten Behebung von Betriebsstörungen von dezentralisiert angeordneten Anlagen mittels einer Sensorik einer Anlage ein Betriebsstörungsereignis der Anlage detektiert wird und wobei basierend auf übertragenen Betriebsstörungsparameter mittels des ersten Notfallinterventionssystem dedizierte Interventionsmittel betriebs- und störungsspezifisch selektiert und aktiviert werden, mittels welchen Interventionsmittel die Betriebsstörung der Anlage behoben wird, wobei die elektronische Schaltvorrichtung bidirektional mit dem ersten und zweiten autonomen Notfallinterventionssystem verbunden wird, wobei mittels der Schaltvorrichtung zwischen dem ersten Notfallinterventionssystem und dem zweiten Notfallinterventionssystem Schaltsignalparametern synchronisiert werden, welche Schaltsignalparameter mindestens einen ersten synchronisierten Signalschwellwertparameterund einen zweiten synchronisierten Signalschwellwertparameter umfassen, wobei einem inkrementierbaren Stapelspeicher eines geschützten Speichermodul der elektronischen Schaltvorrichtung eine Vielzahl von Anlagen zuordnet wird, wobei mittels eines Interfacemodul der elektronischen Schaltvorrichtung vorbestimmte Aktivierungsparameter von der Anlage periodisch über ein Netzwerk übertragen werden und der Stapelspeicher basierend auf dem übertragenen Aktivierungsparameter schrittweise inkrementiert wird, wobei mittels eines Schaltmoduls der elektronischen Schaltvorrichtung ein Stapelspeicherhöhenwert des Stapelspeichers erfasst wird und das erste Notfallinterventionssystem zur automatisierten Betriebsstörungsbehebung mittels dedizierten Aktivierungssignalen des Schaltmoduls freigeschaltet wird, falls der Stapelspeicherhöhenwert ein definierter Speicherschwellwert erreicht, wobei mindestens Teile des Stapelspeicher mittels der Schaltvorrichtung basierend auf den synchronisierten Schaltsignalparametern dem zweiten Notfallinterventionssystem zugeordnet werden, wobei mittels eines Filtermodul umfassend ein Störungsspeichermodul und einen Störungsstapelspeicher der elektronischen Schaltvorrichtung ein vordefinierter Störungsstapelspeicherwert basierend auf den dedizierten Aktivierungssignalen dekrementiert wird, wobei die Aktivierungssignalen basierend auf der Aktivierung der Interventionsmittel mittels des ersten Notfallinterventionssystems entsprechende den Betriebstörungsparameter quantitativ gewichtet generiert werden, wobei bei Erreichen des ersten synchronisierten Signalschwellwertparameters durch den Störungsstapelspeicherwertes des Störungsstapelspeichers die Freischaltung des ersten Notfallinterventionssystems mittels der ersten Aktivierungsvorrichtung der elektronischen Schaltvorrichtung unterbrochen wird und das zweite Notfallinterventionssystem mittels der zweiten Aktivierungsvorrichtung der elektronischen Schaltvorrichtung freigeschaltet wird, und wobei bei Erreichen des zweiten synchronisierten Signalschwellwertparameters durch den Störungsstapelspeicherwertes die Freischaltung des zweiten Notfallinterventionssystems mittels der zweiten Aktivierungsvorrichtung der elektronischen Schaltvorrichtung unterbrochen wird und das erste Notfallinterventionssystem mittels der ersten Aktivierungsvorrichtung zur Betriebsstörungsbehebung freigeschaltet wird. Mittels der ersten und/oder zweiten Aktivierungsvorrichtung kann zur Aktivierung mindestens ein elektronisches Aktivierungssignal basierend auf den übertragenen Betriebsstörungsparameter generiert werden und das Aktivierungssignals auf die Interventionsmittel und/oder Notfallinterventionsvorrichtungen übertragen werden. Die Erfindung hat den Vorteil, dass es auch bei Automatisierung vollkommen stabil bleibt, insbesondere bei schlecht detektierbaren Ereignissen mit kleinem statistischem Auftreten. Ein weiterer Vorteil ist, dass eine Reduktion bei der Betriebssicherung bei den Notfallinterventionssystemen erreicht werden kann, was das System konkurrenzfähiger und besser angepasst macht. Durch die Automatisierung kann das System schnell und allenfalls dynamisch an neue Verhältnisse angepasst werden. Dies war bisher so im Stand der Technik nicht möglich. Mit anderen Worten, wird durch die erfindungsgemässe Lösung eine bis anhin im Stand der Technik nicht bekannte technische Optimierung und Automatisierung der Systeme erreicht.

In einer Ausführungsvariante umfasst die elektronische Schaltvorrichtung ein Historymodul, wobei basierend auf einem Historymodul gespeicherte, zeitlich gekoppelte Betriebsstörungsparameter und/oder Aktivierungsparameter mittels der elektronischen Schaltvorrichtung ersten synchronisierte Signalschwellwertparameter der Schaltsignalparametern synchronisiert generiert werden. Basierend auf dem Historymodul können gespeicherte, zeitlich gekoppelte Betriebsstörungsparameter und/oder Aktivierungsparameter mittels der elektronischen Schaltvorrichtung zweite synchronisierte Signalschwellwertparameter der Schaltsignalparametern synchronisiert und generiert werden. Diese Ausführungsvariante hat insbesondere den Vorteil, dass bei der Synchronisation die Aktivierungsparameter vorherbestimmt werden können, welche dann als Grundlage der Synchronisation dienen. Ein erstes Historymodul mit Datenspeicher kann z.B. auch dem ersten Notfallinterventionssystem zugeordnet sein, während ein zweites Historymodul mit Datenspeicher dem zweiten Notfallinterventionssystem zugeordnet ist. Trotzdem können beide Historymodule z.B. zur elektronischen Schaltvorrichtung gehören.

In einer anderen Ausführungsvariante können die Betriebsstörungsparameter und/oder die Aktivierungsparameter zusätzlich speicherbare und geschützte Datentokens mit Geldbetragswerten umfassen. Solche geschützten Tokens sind technisch einfach zu handhaben und von den Vorrichtungen auszutauschen. Besipieslweise kann der Datentoken verschlüsselt und/oder elektronisch signiert generiert werden. Die Verschlüsselung kann z.B. mittels Public Key Kryptographie und/oder SSL (Secure Sockets Layer) und/oder HTTPS realisiert sein.

In einer weiteren Ausführungsvariante kann die elektronische Schaltvorrichtung ein Clearingmodul umfassen, wobei basierend auf den Betriebsstörungsparameter Clearingdaten an das Clearingmodul der elektronischen Schaltvorrichtung übermittelt werden, welche Clearingdaten Verrechnungsdaten für die Aktivierung des zweites Notfallinterventionssystem umfassen und welche Clearingdaten dem ersten Notfallinterventionssystem zugeordnet sind. Z.B. kann die elektronische Schaltvorrichtung derart realisiert sein, dass das zweite Notfallinterventionssystem zur Aktivierung mittels des Clearingmodul erst nach empfangenen Clearingdaten freigeschaltet wird. Diese Ausführungsvariante hat den Vorteil, dass mindestens eine teilweise Betriebsintervention oder Kontrollausgleich oder Vergütung mittels eines solchen Clearingmoduls automatisiert ausgeführt werden kann. Das Clearingmodul kann ein Teil der Schaltvorrichtung sein, aber auch extern z.B. als Netzwerkeinheit angeordnet sein. Mittels des Clearingmoduls können z.B. entsprechend den empfangenen Clearingdaten das zweite Notfallinterventionssystem zur Aktivierung freigeben werden und/oder mit dem ersten NotfallinterventioOnssystem rückgekoppelt werden.

In einer anderen Ausführungsvariante kann die Aktivierungs- und Sychronisierungsvorrichtung Mittel zum verschlüsselten und zugriffskontrollierten Übertragen der Aktivierungssignaldaten und/oder der Aktivierungsparameter und/oder der umfassen, wobei zur Entschlüsselung der zugriffskontrollierten Aktivierungsimpulses gemäss übertragenen Zugriffsrequestdaten ein Datentoken generierbar ist und an die entsprechende Notfallinterventionsvorrichtung übermittelbar ist, wobei der Datentoken jeweils Daten, welche mindestens Teile eines entsprechenden Schlüssel zu dem zugriffskontrollierten verschlüsselten Aktivierungssignaldaten umfassen, oder eine Zugriffserlaubnis auf einen Schlüssel zum Entschlüsseln der Aktivierungssignaldaten umfasst. Diese Ausführungsvariante hat u.a. den Vorteil, dass die Vorrichtung einen hohen Sicherheitsstandart und ein technisch stabiles Verhalten im Austausch zwischen den Systemen erlaubt. Der Datentoken kann z.B. verschlüsselt und/oder elektronisch signiert sein. Insbesondere kann die Verschlüsselung beispielsweise via Public Key Kryptographie, insbesondere SSL (Secure Sockets Layer) oder HTTPS, durchgeführt werden.

An dieser Stelle soll festgehalten werden, dass sich die vorliegende Erfindung neben dem erfindungsgemässen Verfahren auch auf eine elektronischen Schaltvorrichtung zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegte Figuren illustriert:

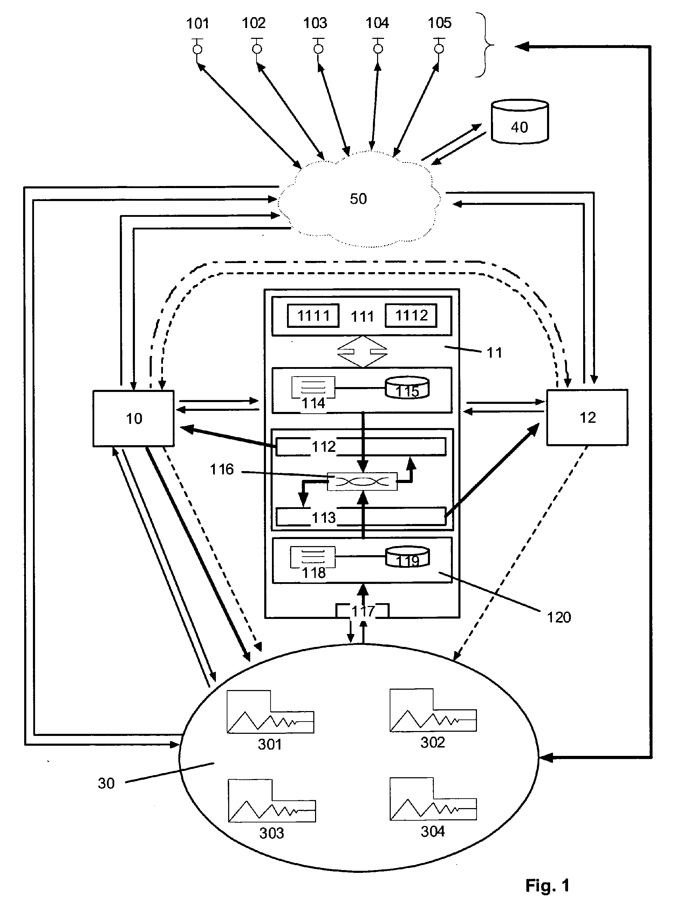

Figur 1 zeigt ein Blockdiagramm, welches schematisch eine elektronische Schaltvorrichtung 11 zeigt, welche zur Realisierung der Erfindung verwendet werden kann. Mittels einer Sensorik 301,302,303,304 einer Anlage wird ein Betriebsstörungsereignis der Anlage detektiert und es werden basierend auf übertragenen Betriebsstörungsparameter mittels des ersten Notfallinterventionssystem 10 dedizierte Interventionsmittel 101,...,105 betriebs- und störungsspezifisch selektiert und aktiviert. Mittels der Interventionsmittel 101,...,105 wird die Betriebsstörung der Anlage behoben.

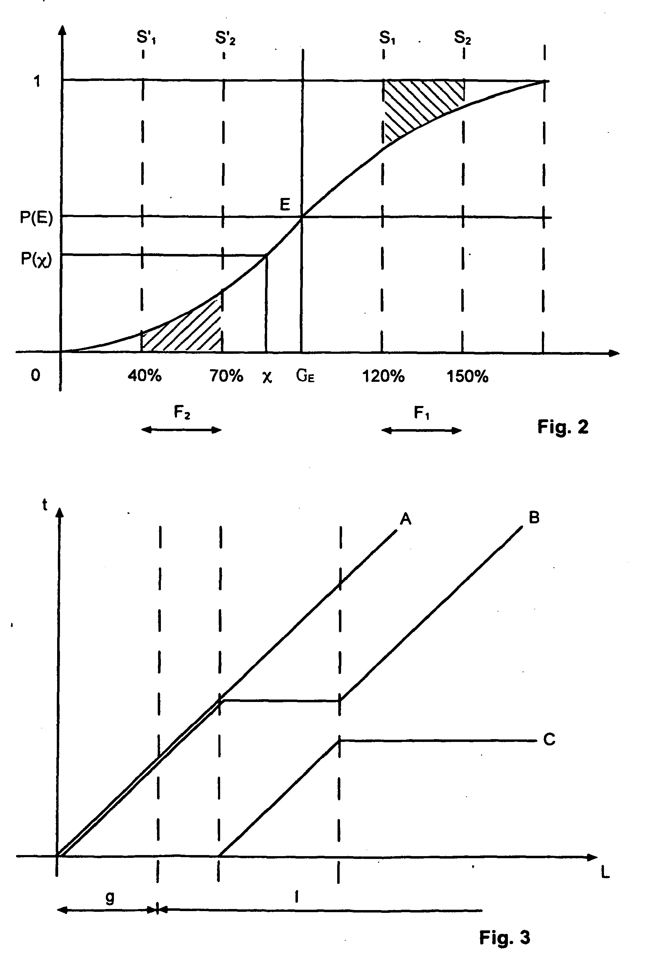

Figur 2 illustriert ein Beispiel einer Wahrscheinlichkeitsverteilung für Aktivierungen der ersten Kontrollvorrichtung 10. Die Werte des Verhältnisses der Betriebsstörungen zum Stapelspeicherhöhenwert des Stapelspeichers 114 werden durch die Abszisse und die Werte der Wahrscheinlichkeit durch die Ordinate wiedergegeben. Ein Wert x des Verhältnisses der Aktivierung bzw. Betriebsstörungen zum Stapelspeicherhöhenwert des Stapelspeichers 114 entspricht der Wahrscheinlichkeit P(x), welches z.B. die Wahrscheinlichkeit für das erste Notfallinterventionssystem 10 ist, dass im Verlaufe einer Zeiteinheit (z.B. ein Jahr) einen bestimmten Prozentsatz an übertragenen Betriebsstörungsparameter das Verhältnis zum Stapelspeicherhöhenwert zwischen 0% und x% verliert, d.h. die elektronische Schaltvorrichtung umfaschaltet.
Figur 3 illustriert ebenfalls mittels der Kurve ein Beispiel eines Verhältnisses von übertragenen Betriebsstörungsparameter zum Stapelspeicherhöhenwert des Stapelspeichers 114, das kleiner als 1 ist, d.h. der Rate an Betriebsinterventionen in Abhängigkeit der Zeit. Die Achse L referenziert den dekrementierten Störungsstapelspeicherwert durch die den dedizierten Aktivierungssignalen und/oder Betriebsstörungsparameter in Abhängigkeit der Zeit t. A ist der effektiv anfallende Rate. B zeigt die vom ersten Notafllinterventionssystem 10 aktivierten Interventionsmittel und C die vom zweiten Notafllinterventionssystem 12 aktivierten Interventionsmittel. Im Bereich g ist das Verhältnis von übertragenen Betreibsstörungsparametern zum Stapelspeicherhöhenwert grösser als 1, während 1 den Bereich zeigt, in welchem das Verhältnis kleiner als 1 ist.

Figur 1 illustriert eine Architektur, wie sie zur Realisierung der Erfindung verwendet werden kann. Figur 1 zeigt ein Blockdiagramm, welches schematisch eine erfindungsgemässe Vorrichtung und ein entsprechendes Verfahren zur elektronischen Schaltung zweier autonomer Notfallinterventionssysteme 10,12 zur automatisierten Behebung von Betriebsstörungen von dezentralisiert angeordneten und/oder betriebenen Anlagen und/oder Vorrichtungen 30 illustriert. Unter Anlagen sind jede Art von technischen Anlagen und Vorrichtungen, bewegliche und unbewegliche zu verstehen. Z.B. können Anlagen Herstellungsvorrichtungen aller Art, technischen Hilfsmittel und Maschienen, Kraftfahrzeuge alller Art, entsprechende Bauwerke mit technischen Mitteln etc. umfassen. Das automatisierte Notfallinterventionssystem 10/12 kann z.B. automatisch ausgelöste Löschsysteme, Stromunterbruchs- oder Notgeneratorsysteme, Betriebskontrollsysteme mit automatisierten Steuer- und/oder Alarmvorrichtungen, Signalumwandlungs- oder Relaissysteme zur automatisierten Alarm- oder Kontrollsteuerauslösung etc. umfassen. Das Notfallinterventionssystem 10/12 kann zur automatisierten Notfallintervention bei Betriebsstörungen mittels einer Kontroll- und/oder Alarmvorrichtung uni- oder bidirektional mit den Anlagen 30 verbunden sein. Die Verbindung kann über eine luft- und/oder landgestützte Verbindung, insbesondere festverbunden und/oder drahtlos, erfolgen.

Mittels einer Sensorik 301,302,303,304 einer Anlage wird ein Betriebsstörungsereignis der Anlage detektiert. Die Sensorik 301,302,303,304 kann z.B. Rauch- und/oder Wärme- und/oder Feuchtigkeits- und/oder Bewegungs- und/oder Tonsensoren umfassen. Die Sensorik 301,302,303,304 kann z.B. auch mindestens eine Scaneinheit mit einem Bilderkennungsmodul umfassen. Die Sensorik 301,302,303,304 kann z.B. auch ein Ortserfassungsmodul umfassen, mittels welchem Ortserfassungsmoduls Ortskoordinatenparameter des aktuellen Standortes der Anlage oder Vorrichtung generiert werden und mittels der Kontroll- und/oder Alarmvorrichtun der Analge 30 auf die elektronische Schaltvorrichtung 11 übermittelt werden. Insbesondere kann die Sensorik 301,302,303,304 auch Mittel zum Erfassen von benutzerspezifischen Messparameters des Betreibers der Anlage (z.B. Blutdruck, Alkohol, Eyetracking, Hautoberflächenspannung, Blutzucker, Herzschlag etc.) umfassen. Basierend auf übertragenen Betriebsstörungsparameter werden mittels des ersten Notfallinterventionssystem 10 dedizierte Interventionsmittel 101,...,105 betriebs- und störungsspezifisch selektiert und aktiviert. Die Übertragung kann z.B. über ein Netzwerk 50 erfolgen. Das Kommunikationsnetz 50 umfasst beispielsweise ein GSM- oder ein UMTS-Netz, oder ein satellitenbasiertes Mobilfunknetz und/oder ein oder mehrere Festnetze, beispielsweise das öffentlich geschaltete Telefonnetz, das weltweite Internet oder ein geeignetes LAN (Local Area Network) oder WAN (Wide Area Network). Insbesondere umfasst es auch ISDN- und XDSL-Verbindungen. Mittels der Interventionsmittel 101,...,105 wird die Betriebsstörung der Anlage und/oder Vorrichtung behoben wird. Mittels Aktivierungsmodulen der Notfallinterventionsvorrichtungen 10/12 und/oder der elektronischen Schaltung 11 können basierend auf der detektierten Betriebsstörung dedizierte Aktivierungssignaldaten generiert und auf ein entsprechendes, automatisiertes Interventionsmittel 101,...,105 übertragen werden. Die Aktivierungsmodule können uni- oder bidirektional mit den automatisierten Interventionsmittel 101,...,105 verbunden sein. Dies erlaubt eine voll automatisierte Kontrolle, Steuerung bzw. Intervention. Mittels des Interventionsmittel 101,...,105 wird die Betriebsstörung behoben, so dass die Anlage 30 für den Benutzer wieder den vollen Betrieb ausführen kann. Die automatisierten Interventionsmittel 101,...,105 können z.B. automatisch ausgelöste Löschsysteme, Stromunterbruchs- oder Notgeneratorsysteme, Betriebskontrollsysteme mit automatisierten Steuer- und/oder Alarmvorrichtungen (insbesondere zur Alarmauslösung für Polizei- , Militär-, Katastrophen- oder Krankenretteinsätzen), Signalumwandlungs- oder Relaissysteme zur automatisierten Alarm- oder Kontrollsteuerauslösung, Steuer- und Regelungssysteme für Kanalisationen oder anderen Röhrensystemen etc. umfassen.

Die elektronische Schaltvorrichtung 11 ist bidirektional mit dem ersten und zweiten autonomen Notfallinterventionssystem 10,12 verbunden. Die Verbindung kann z.B. wie bei der Anbidnung an die Sensorik 301,302,303,304 über ein Netzwerkinterface 117 direkt oder über das Netzwerk 50 erfolgen. Mittels der elektronischen Schaltvorrichtung 11 werden zwischen dem ersten Notfallinterventionssystem 10 und dem zweiten Notfallinterventionssystem 11 Schaltsignalparametern 111 synchronisiert. Die Schaltsignalparameter 11 umfassen mindestens einen ersten synchronisierten Signalschwellwertparameter 1111 und einen zweiten synchronisierten Signalschwellwertparameter 1112. Zur Synchronisierung können z.B. mittels eines Analysemodul der elektronischen Schaltvorrichtung 11 zwei speicherbare Schwellwertparameter (S₁) und (S₂) eines ersten Intervalls (F₁) von Erwartungswerten umfasst, für welche das zweite Notfallinterventionssystem 12 aktivierbar ist und zwei weitere speicherbare Schwellwertparameter (S₁') und (S₂') eines zweiten Intervalls (F₂) von Erwartungswerten umfasst, für welche Erwartungswerte das erste Notfallinterventionssystem 10 reaktiviert wird. Die Parameter (S₁), (S₂), (S₁'), und (S₂') können z.B. mittels Synchronisationsmodulen variierbar sein, wobei die Synchronisationsmodule das Analysemodul solange aktivieren, bis die Parameter innerhalb einer bestimmbaren Varianz liegen. Parametrisierte Betriebsstörungswahrscheinlichkeiten von einer Vielzahl von Anlagen 30 können z.B. mittels entsprechender Parameter auf das Notfallinterventionssyystem 10/ 12 und/oder die elektronische Schaltvorrichtung 11 übertragen werden. Das zweiten Intervalls (F₂) umfasst Erwartungswertparameter für Betriebsstörungswahrscheinlichkeiten, für welche Erwatungswertparameter beim Ablauf des bestimmbaren und synchronisierten Zeitfensters der Staplespeicher nicht dekrementierte Betriebsstörungsparameter umfasst. Die Werte von (S₁') und (S₂') können z.B. zwischen 40% bis 70% der Wahrscheinlichkeit des Anfallens eines oder mehreren Betriebsstörungen umfassen. Einem inkrementierbaren Stapelspeicher 112 eines geschützten Speichermodul 115 der elektronischen Schaltvorrichtung 11 werden eine Vielzahl von Anlagen 30 zuordnet. Mittels eines Interfacemodul 117 der elektronischen Schaltvorrichtung 11 werden vorbestimmte Aktivierungsparameter von der Anlage periodisch über ein Netzwerk 50 übertragen und der Stapelspeicher 112 wird basierend auf dem übertragenen Aktivierungsparameter schrittweise inkrementiert. Mittels eines Schaltmoduls 116 der elektronischen Schaltvorrichtung 1 wird ein Stapelspeicherhöhenwert des Stapelspeichers 114 erfasst. Das erste Notfallinterventionssystem 10 wird zur automatisierten Betriebsstörungsbehebung mittels dedizierten Aktivierungssignalen des Schaltmoduls 116 freigeschaltet, falls der Stapelspeicherhöhenwert ein definierter Speicherschwellwert erreicht, wobei mindestens Teile des Stapelspeicher 114 mittels der Schaltvorrichtung 11 basierend auf den synchronisierten Schaltsignalparametern 111 dem zweiten Notfallinterventionssystem 12 zugeordnet werden. Die Aktivierungsparameter und/oder Aktivierungssignaldaten können z.B. zusätzlich speicherbare und geschützte Datentokens mit Geldbetragswerten umfassen. Die Datentoken können verschlüsselt und/oder elektronisch signiert generiert werden. Die Verschlüsselung kann mittels Public Key Kryptographie und/oder SSL (Secure Sockets Layer) und/oder HTTPS realisiert sein.

Mittels eines Filtermoduls 120 der elektronischen Schaltvorrichtung 11, welches ein Störungsspeichermodul 118 und einen Störungsstapelspeicher 119 umfasst, wird ein vordefinierter Störungsstapelspeicherwert basierend auf den dedizierten Aktivierungssignalen dekrementiert. Die Aktivierungssignalen werden basierend auf der Aktivierung der Interventionsmittel 40 mittels des ersten Notfallinterventionssystems 10 entsprechende den Betriebstörungsparameter quantitativ gewichtet generiert. Bei Erreichen des ersten synchronisierten Signalschwellwertparameters durch den Störungsstapelspeicherwertes des Störungsstapelspeichers 119 wird die Freischaltung des ersten Notfallinterventionssystems 10 mittels der ersten Aktivierungsvorrichtung 112 der elektronischen Schaltvorrichtung 11 unterbrochen und das zweite Notfallinterventionssystem 12 wird mittels der zweiten Aktivierungsvorrichtung 113 der elektronischen Schaltvorrichtung 11 freigeschaltet. Bei Erreichen des zweiten synchronisierten Signalschwellwertparameters durch den Störungsstapelspeicherwertes wird die Freischaltung des zweiten Notfallinterventionssystems 10 mittels der zweiten Aktivierungsvorrichtung 113 der elektronischen Schaltvorrichtung 11 unterbrochen und das erste Notfallinterventionssystem 12 wird mittels der ersten Aktivierungsvorrichtung 112 zur Betriebsstörungsbehebung freigeschaltet. Mittels eines Netzwerkinterface kann das Notfallinterventionssystem 10/12 z.B. auf mindestens eine dezentralisierte Datenbank mit zugeordneten Börsen- oder Finanzinstitutparametern zugreift. Aktivierungsparameter können damit z.B. insbesondere auf den übertragenen Börsen- oder Finanzinstitutparametern basieren. Zur Aktivierung mittels der ersten und/oder zweiten Aktivierungsvorrichtung 112/113 kann z.B. mindestens ein elektronisches Aktivierungssignal basierend auf den übertragenen Betriebsstörungsparameter generiert werden und das Aktivierungssignals auf die Interventionsmittel 101,...,105 und/oder Notfallinterventionsvorrichtungen 10/12 übertragen werden.

In einem Ausführungsbeispiel können z.B. basierend auf einem Historymodul 40 gespeicherte, zeitlich gekoppelte Betriebsstörungsparameter und/oder Aktivierungsparameter mittels der elektronischen Schaltvorrichtung 11 ersten synchronisierte Signalschwellwertparameter 1111 der Schaltsignalparametern 111 synchronisiert generiert werden. Basierend auf dem Historymodul 40 können gespeicherte, zeitlich gekoppelte Betriebsstörungsparameter und/oder Aktivierungsparameter mittels der elektronischen Schaltvorrichtung 11 zweite synchronisierte Signalschwellwertparameter 1112 der Schaltsignalparametern 111 generiert und/oder synchronisiert werden. Das Historymodul 40 kann z.B. mittels Pareto-Verfahren mit einem Parameter und/oder eines generalisierte Pareto-Verfahren mit zwei Parameter und/oder eines Gamma-Verfahren mit zwei Parametern und/oder eines LogNormal-Verfahren mit zwei Parametern und/oder eines LogGamma-Verfahren mit zwei Parametern zu erwartende Aktivierungsparameter und/oder Aktivierungssignaldaten bestimmt und/oder synchronisiert werden. Das Historymodul 40 kann z.B. mindestens ein MonteCarlo-Modul zur Generierung von stochastischen Daten umfasst. Die elektronische Schaltvorrichtung 11 und oder das Historymodul 40 können z.B. ein zusätzliches Filtermodul umfasst, wobei historische Daten dezentralisiert über ein Netzwerk angeordneter Datenbanken basierend auf bestimmbaren Risiken und/oder technischen Vorrichtungen selektiert werden und in einer Speichereinheit abgespeichert werden. Basierend auf den Betriebsstörungsparameter können z.B. auch Clearingdaten an ein Clearingmodul der elektronischen Schaltvorrichtung 11 übermittelt werden. Die Clearingdaten können Verrechnungsdaten für die Aktivierung des zweites Notfallinterventionssystem 12 umfassen und/oder dem ersten Notfallinterventionssystem 10 zugeordnet sein. Das gleiche gilt für Verrechnungsdaten zur Aktivierung. Das Clearingmodul kann derart realisiert sein, dass erst nach empfangenen Clearingdaten das zweite Notfallinterventionssystem 12 zur Aktivierung freigeschaltet wird. Mittels der generierten Aktivierungssignalen könne auch elektronisch signierte Verrechnungsbelege über die elektronische Schaltvorrichtung 11 übermittelt werden.

Zur Realisierung ist klar, dass die elektronische Schaltvorrichtung und/oder die Notfallinterventionssysteme 10/12 können z.B. ein oder mehrere verschiedene physikalische Netzwerkschnittstellen, die auch mehrere unterschiedliche Netzwerkstandards unterstützen können, umfassen. Die physikalischen Netzwerkschnittstellen können z.B. Schnittstellen zu WLAN (Wireless Local Area Network), Bluetooth, GSM (Global System for Mobile Communication), GPRS (Generalized Packet Radio Service), USSD (Unstructured Supplementary Services Data), UMTS (Universal Mobile Telecommunications System) und/oder Ethernet oder einem anderen Wired LAN (Local Area Network) etc. umfassen. Dementsprechend kann das Netzwerk 50 für verschiedene heterogene Netzwerke stehen, wie z.B. ein Bluetooth-Netzwerk, z.B. für Installationen in überdachten Örtlichkeiten, ein Mobilfunknetz mit GSM und/oder UMTS etc., ein Wireless LAN z.B. basierend auf IEEE wireless 802.1 x, aber auch einem Wired LAN, d.h. einem lokalen Festnetz, insbesondere auch dem PSTN (Public Switched Telephone Network) etc. Prinzipiell ist zu sagen, dass das Verfahren und/oder System nicht an spezifische Netzwerkstandarts gebunden ist, sofern die erfindungsgemässen Merkmale vorhanden sind.

### Referenzliste

- 10: Erstes autonomes Notfallinterventionssystem 101,...,105 Interventionsmittel
- 11: Elektronische Schaltvorrichtung
111 Schaltsignalparametern
1111 Ersten synchronisierte Signalschwellwertparameter
1112 Zweite synchronisierte Signalschwellwertparameter
112 Erste Aktivierungsvorrichtung
113 Zweite Aktivierungsvorrichtung
114 Inkrementierbarer Stapelspeicher
115 Speichermodul
116 Schaltmodul
117 Interfacemodul
118 Störungsspeichermodul
119 Störungsstapelspeicher
120 Filtermodul
- 12: Zweites autonomes Notfallinterventionssystem
- 30: Anlage/Betriebsanlage
301,302,303,304 Sensorik
- 40: Historymodul
- 50: Netzwerk

## Patentansprüche

1. Verfahren zur elektronischen Schaltung (11) zweier autonomer Notfallinterventionssysteme (10,12) zur automatisierten Behebung von Betriebsstörungen von dezentralisiert angeordneten Anlagen, wobei mittels einer Sensorik (301,302,303,304) einer Anlage ein Betriebsstörungsereignis der Anlage detektiert wird und wobei basierend auf übertragenen Betriebsstörungsparameter mittels des ersten Notfallinterventionssystem (10) dedizierte Interventionsmittel (101,...,105) betriebs- und störungsspezifisch selektiert und aktiviert werden, mittels welchen Interventionsmittel (101,...,105) die Betriebsstörung der Anlage behoben wird, **dadurch gekennzeichnet,**
**dass** die elektronische Schaltvorrichtung (11) bidirektional mit dem ersten und zweiten autonomen Notfallinterventionssystem (10,12) verbunden wird, wobei mittels der Schaltvorrichtung (11) zwischen dem ersten Notfallinterventionssystem (10) und dem zweiten Notfallinterventionssystem (12) Schaltsignalparametern (111) synchronisiert werden, welche Schaltsignalparameter (111) mindestens einen ersten synchronisierten Signalschwellwertparameter (1111) und einen zweiten synchronisierten Signalschwellwertparameter (1112) umfassen, und die ersten synchronisierten Signalschwellwertparameter (1111) der Schaltsignalparametern (111) basierend auf einem Historymodul (40) gespeicherte, zeitlich gekoppelte Betriebsstörungsparameter und/oder Aktivierungsparameter mittels der elektronischen Schaltvorrichtung (11) synchronisiert generiert werden,
**dass** einem inkrementierbaren Stapelspeicher (114) eines geschützten Speichermodul (115) der elektronischen Schaltvorrichtung (11) eine Vielzahl von Anlagen (30) zuordnet wird, wobei mittels eines Interfacemodul (117) der elektronischen Schaltvorrichtung (11) vorbestimmte Aktivierungsparameter von der Anlage periodisch über ein Netzwerk (50) übertragen werden und der Stapelspeicher (114) basierend auf dem übertragenen Aktivierungsparameter schrittweise inkrementiert wird,
**dass** mittels eines Schaltmoduls (116) der elektronischen Schaltvorrichtung (11) ein Stapelspeicherhöhenwert des Stapelspeichers (114) erfasst wird und das erste Notfallinterventionssystem (10) zur automatisierten Betriebsstörungsbehebung mittels dedizierten Aktivierungssignalen des Schaltmoduls (116) freigeschaltet wird, falls der Stapelspeicherhöhenwert ein definierter Speicherschwellwert erreicht, wobei mindestens Teile des Stapelspeichers (114) mittels der Schaltvorrichtung (11) basierend auf den synchronisierten Schaltsignalparametern (111) dem zweiten Notfallinterventionssystem (12) zugeordnet werden,
**dass** mittels eines Filtermodul (120) umfassend ein Störungsspeichermodul (118) und einen Störungsstapelspeicher (119) der elektronischen Schaltvorrichtung (11) ein vordefinierter Störungsstapelspeicherwert basierend auf den dedizierten Aktivierungssignalen dekrementiert wird, wobei die Aktivierungssignalen basierend auf der Aktivierung der Interventionsmittel (40) mittels des ersten Notfallinterventionssystems (10) entsprechende den Betriebstörungsparameter quantitativ gewichtet generiert werden,
**dass** bei Erreichen des ersten synchronisierten Signalschwellwertparameters (1111) durch den Störungsstapelspeicherwertes des Störungsstapelspeichers (119) die Freischaltung des ersten Notfallinterventionssystems (10) mittels der ersten Aktivierungsvorrichtung (112) der elektronischen Schaltvorrichtung (11) unterbrochen wird und das zweite Notfallinterventionssystem (12) mittels der zweiten Aktivierungsvorrichtung (113) der elektronischen Schaltvorrichtung (11) freigeschaltet wird, und
**dass** bei Erreichen des zweiten synchronisierten Signalschwellwertparameters (1112) durch den Störungsstapelspeicherwertes die Freischaltung des zweiten Notfallinterventionssystems (12) mittels der zweiten Aktivierungsvorrichtung (113) der elektronischen Schaltvorrichtung (11) unterbrochen wird und das erste Notfallinterventionssystem (10) mittels der ersten Aktivierungsvorrichtung (112) zur Betriebsstörungsbehebung freigeschaltet wird.

2. Verfahren nach Anspruch 1, **dadurch gekennzeichnet, dass** mittels der ersten und/oder zweiten Aktivierungsvorrichtung (112/113) zur Aktivierung mindestens ein elektronisches Aktivierungssignal basierend auf den übertragenen Betriebsstörungsparameter generiert wird und das Aktivierungssignals auf die Interventionsmittel (101,...,105) und/oder Notfallinterventionsvorrichtungen (10/12) übertragen wird.

3. Verfahren nach einem der Ansprüche 1 oder 2, **dadurch gekennzeichnet, dass** basierend auf einem Historymodul (40) gespeicherte, zeitlich gekoppelte Betriebsstörungsparameter und/oder Aktivierungsparameter mittels der elektronischen Schaltvorrichtung (11) zweite synchronisierte Signalschwellwertparameter (1112) der Schaltsignalparametern (111) synchronisiert und generiert werden.

4. Verfahren nach einem der Ansprüche 1 bis 3, **dadurch gekennzeichnet, dass** die Aktivierungsparameter zusätzlich speicherbare und geschützte Datentokens mit Geldbetragswerten umfassen.

5. Verfahren nach Anspruch 4, **dadurch gekennzeichnet, dass** der Datentoken verschlüsselt und/oder elektronisch signiert generiert werden.

6. Verfahren nach Anspruch 5, **dadurch gekennzeichnet, dass** die Verschlüsselung mittels Public Key Kryptographie und/oder SSL (Secure Sockets Layer) und/oder HTTPS realisiert wird.

7. Verfahren nach einem der Ansprüche 1 bis 6, **dadurch gekennzeichnet, dass** basierend auf den Betriebsstörungsparameter Clearingdaten an ein Clearingmodul der elektronischen Schaltvorrichtung (11) übermittelt werden, welche Clearingdaten Verrechnungsdaten für die Aktivierung des zweites Notfallinterventionssystem (12) umfassen und welche Clearingdaten dem ersten Notfallinterventionssystem (10) zugeordnet sind.

8. Verfahren nach Anspruch 7, **dadurch gekennzeichnet, dass** mittels des Clearingmodul erst nach empfangenen Clearingdaten das zweite Notfallinterventionssystem (12) zur Aktivierung freigeschaltet wird.

9. Verfahren nach einem der Ansprüche 1 bis 8, **dadurch gekennzeichnet, dass** mittels der generierten Aktivierungssignalen elektronisch signierte Verrechnungsbelege über die elektronische Schaltvorrichtung (11) übermittelt werden.

10. Elektronische Schaltvorrichtung (11) zur Schaltung zweier autonomer Notfallinterventionssysteme (10,12) zur automatisierten Behebung von Betriebsstörungen von dezentralisiert angeordneten Anlagen, wobei mittels einer Sensorik (301,302,303,304) einer Anlage ein Betriebsstörungsereignis der Anlage detektierbar und wobei basierend auf übertragenen Betriebsstörungsparameter mittels des ersten Notfallinterventionssystem (10) dedizierte Interventionsmittel (101,...,105) betriebs- und störungsspezifisch selektierbar und aktivierbar sind, mittels welchen Interventionsmittel (101,...,105) die Betriebsstörung der Anlage behebbar ist, **dadurch gekennzeichnet,**
**dass** die elektronische Schaltvorrichtung (11) bidirektional mit dem ersten und zweiten autonomen Notfallinterventionssystem (10,12) verbunden ist, wobei mittels der Schaltvorrichtung (11) zwischen dem ersten Notfallinterventionssystem (10) und dem zweiten Notfallinterventionssystem (12) Schaltsignalparametern (111) synchronisierbar sind, welche Schaltsignalparameter (111) mindestens einen ersten synchronisierten Signalschwellwertparameter (1111) und einen zweiten synchronisierten Signalschwellwertparameter (1112) umfassen, und die ersten synchronisierten Signalschwellwertparameter (1111) der Schaltsignalparametern (111) basierend auf einem Historymodul (40) gespeicherte, zeitlich gekoppelte Betriebsstörungsparameter und/oder Aktivierungsparameter mittels der elektronischen Schaltvorrichtung (11) synchronisiert generierbar sind,
**dass** die elektronische Schaltvorrichtung (11) einen inkrementierbaren Stapelspeicher (112) mit einem geschützten Speichermodul (115) umfasst, wobei dem inkrementierbare Stapelspeicher (114) eine Vielzahl von Anlagen (30) zuordnet ist, und wobei mittels eines Interfacemodul (117) der elektronischen Schaltvorrichtung (11) vorbestimmte Aktivierungsparameter von der Anlage periodisch über ein Netzwerk (50) übertragbar sind und der Stapelspeicher (114) basierend auf dem übertragenen Aktivierungsparameter schrittweise inkrementierbar ist,
**dass** die elektronischen Schaltvorrichtung (11) ein Schaltmodul (116) zum Freischalten des ersten Notfallinterventionssystem (10) umfasst, wobei mittels des Schaltmoduls (116) ein Stapelspeicherhöhenwert des Stapelspeichers (114) erfassbar ist und, falls der Stapelspeicherhöhenwert ein definierter Speicherschwellwert erreicht, das erste Notfallinterventionssystem (10) zur automatisierten Betriebsstörungsbehebung mittels dedizierten Aktivierungssignalen einer ersten Aktivierungsvorrichtung (112) freischaltbar ist, von welchem Stapelspeicher (114) mittels der Schaltvorrichtung (11) basierend auf den synchronisierten Schaltsignalparametern (111) mindestens Teile dem zweiten Notfallinterventionssystem (12) zugeordnet sind,
**dass** die elektronische Schaltvorrichtung (11) ein Filtermodul (120) mit einem Störungsspeichermodul (118) und einem Störungsstapelspeicher (119) zum Dekrementieren eines vordefinierten Störungsstapelspeicherwertes basierend auf den dedizierten Aktivierungssignalen umfasst, wobei die Aktivierungssignalen basierend auf der Aktivierung der Interventionsmittel (40) mittels des ersten Notfallinterventionssystems (10) entsprechende den Betriebstörungsparameter quantitativ gewichtet sind,
**dass** bei Erreichen des ersten synchronisierten Signalschwellwertparameters durch den Störungsstapelspelcherwertes des Störungsstapelspeichers (119) die Freischaltung des ersten Notfallinterventionssystems (10) mittels der ersten Aktivierungsvorrichtung (112) der elektronischen Schaltvorrichtung (11) unterbrochen ist und das zweite Notfallinterventionssystem (12) mittels der zweiten Aktivierungsvorrichtung (113) der elektronischen Schaltvorrichtung (11) freigeschaltet ist, und
**dass** bei Erreichen des zweiten synchronisierten Signalschwellwertparameters durch den Störungsstapelspeicherwertes die Freischaltung des zweiten Notfallinterventionssystems (10) mittels der zweiten Aktivierungsvorrichtung (113) der elektronischen Schaltvorrichtung (11) unterbrochen ist und das erste Notfallinterventionssystem (12) mittels der ersten Aktivierungsvorrichtung (112) zur Betriebsstörungsbehebung freigeschaltet ist.

11. Elektronische Schaltvorrichtung (11) nach Anspruch 10, **dadurch gekennzeichnet, dass** das erste und/oder zweite Aktivierungsvorrichtung (112/113) zur Aktivierung Mittel zum Generieren mindestens eines elektronischen Aktivierungssignals basierend auf den übertragenen Betriebsstörungsparameter und Mittel zum Übertragen des Aktivierungssignals auf die Interventionsmittel (101,...,105) umfasst.

12. Elektronische Schaltvorrichtung (11) nach einem der Ansprüche 10 oder 11, **dadurch gekennzeichnet, dass** basierend auf einem Historymodul (40) gespeicherte, zeitlich gekoppelte Betriebsstörungsparameter und/oder Aktivierungsparameter mittels der elektronischen Schaltvorrichtung (11) zweite synchronisierte Signalschwellwertparameter (1112) der Schaltsignalparametern (111) synchronisiert generierbar sind.

13. Elektronische Schaltvorrichtung (11) nach einem der Ansprüche 10 bis 12, **dadurch gekennzeichnet, dass** die Aktivierungsparameter zusätzlich speicherbare und geschützte Datentokens mit Geldbetragswerten umfassen.

14. Elektronische Schaltvorrichtung (11) nach Anspruch 13, **dadurch gekennzeichnet, dass** der Datentoken verschlüsselt und/oder elektronisch signiert sind.

15. Elektronische Schaltvorrichtung (11) nach Anspruch 14, **dadurch gekennzeichnet, dass** die Verschlüsselung mittels Public Key Kryptographie und/oder SSL (Secure Sockets Layer) und/oder HTTPS realisiert ist.

16. Elektronische Schaltvorrichtung (11) nach einem der Ansprüche 10 bis 15, **dadurch gekennzeichnet, dass** die elektronische Schaltvorrichtung (11) ein Clearingmodul umfasst, wobei basierend auf den Betriebsstörungsparameter Clearingdaten an das Clearingmodul übermittelbar sind, welche Clearingdaten Verrechnungsdaten für die Aktivierung des zweites Notfallinterventionssystem (12) umfassen und welche Clearingdaten dem ersten Notfallinterventionssystem (10) zugeordnet sind.

17. Elektronische Schaltvorrichtung (11) nach Anspruch 16, **dadurch gekennzeichnet, dass** mittels des Clearingmodul erst nach empfangenen Clearingdaten das zweite Notfallinterventionssystem (12) zur Aktivierung freischaltbar ist.

18. Elektronische Schaltvorrichtung (11) nach einem der Ansprüche 10 bis 17, **dadurch gekennzeichnet, dass** die Aktlvierungssignale elektronisch signierte Verrechnungsbelege umfassen, welche über die elektronische Schaltvorrichtung (11) übermittelbar sind.

19. Elektronische Schaltvorrichtung (11) nach einem der Ansprüche 10 bis 18, **dadurch gekennzeichnet, dass** die Sensorik (301,302,303,304) mindestens Rauch- und/oder Wärme- und/oder Feuchtigkeits- und/oder Bewegungs- und/oder Tonsensoren umfasst.

20. Elektronische Schaltvorrichtung (11) nach einem der Ansprüche 10 bis 19, **dadurch gekennzeichnet, dass** die Sensorik (301,302,303,304) mindestens eine Scaneinheit mit einem Bilderkennungsmodul umfasst.

## Claims

1. Method for electronic switching (11) of two autonomous emergency intervention systems (10,12) for automated correction of malfunctions of systems which are arranged in a decentralised manner, wherein by means of sensors (301,302,303,304) of a system a malfunction event of the system is detected, and wherein, on the basis of transmitted malfunction parameters, by means of the first emergency intervention system (10), dedicated Intervention means (101,...,105) are selected and activated specifically to the operation and malfunction, by means of which intervention means (101,...,105) the malfunction of the system is corrected, **characterized in that**
the electronic switching device (11) is connected bidirectionally to the first and second autonomous emergency intervention systems (10,12), switching signal parameters (111) being synchronised by means of the switching device (11) between the first emergency intervention system (10) and the second emergency intervention system (12), said switching signal parameters (111) including at least one first synchronised signal threshold parameter (1111) and one second synchronised signal threshold parameter (1112), and the first synchronised signal threshold parameters (1111) of the switching signal parameters (111) being generated in synchronised form by means of the electronic switching device (11) on the basis of malfunction parameters and/or activation parameters which are stored in a history module (40) and temporally coupled,
multiple systems (30) are associated with an incrementable stack memory (114) of a protected memory module (115) of the electronic switching device (11), predetermined activation parameters being periodically transmitted by the system via a network (50) by means of an interface module (117) of the electronic switching device (11), and the stack memory (114) being incremented in steps on the basis of the transmitted activation parameters,
by means of a switching module (116) of the electronic switching device (11), a stack memory level value of the stack memory (114) is captured, and the first emergency intervention system (10) for automated malfunction correction is enabled by means of dedicated activation signals of the switching module (116) if the stack memory level value reaches a defined memory threshold, at least parts of the stack memory (114) being assigned to the second emergency intervention system (12) by means of the switching device (11), on the basis of the synchronised switching signal parameters (111),
by means of a filter module (120), including a malfunction memory module (118) and a malfunction stack memory (119) of the electronic switching device (11), a predefined malfunction stack memory value is decremented on the basis of the dedicated activation signals, which are generated with quantitative weighting corresponding to the malfunction parameters by means of the first emergency intervention system (10) on the basis of activation of the intervention means (40),
when the first synchronised signal threshold parameter (1111) is reached by the malfunction stack memory value of the malfunction stack memory (119), the enabling of the first emergency intervention system (10) is interrupted by means of the first activation device (112) of the electronic switching device (11), and the second emergency intervention system (12) is enabled by means of the second activation device (113) of the electronic switching device (11), and
when the second synchronised signal threshold parameter (1112) is reached by the malfunction stack memory value, the enabling of the second emergency intervention system (12) is interrupted by means of the second activation device (113) of the electronic switching device (11), and the first emergency intervention system (10) is enabled for malfunction correction by means of the first activation device (112).

2. Method according to Claim 1, **characterized in that** by means of the first and/or second activation device (112/113) for activation, at least one electronic activation signal is generated on the basis of the transmitted malfunction parameters, and the activation signal is transmitted to the intervention means (101,...,105) and/or emergency intervention devices (10/12).

3. Method according to one of Claims 1 or 2, **characterized in that** second synchronised signal threshold parameters (1112) of the switching signal parameters (111) are generated in synchronised form by means of the electronic switching device (11) on the basis of malfunction parameters and/or activation parameters which are stored in a history module (40) and temporally coupled.

4. Method according to one of Claims 1 to 3, **characterized in that** the activation parameters additionally include storable and protected data tokens with money amount values.

5. Method according to Claim 4, **characterized in that** the data token is generated in encrypted and/or electronically signed form.

6. Method according to Claim 5, **characterized in that** the encryption is implemented by means of Public Key Cryptography and/or SSL (Secure Sockets Layer) and/or HTTPS.

7. Method according to one of Claims 1 to 6, **characterized in that** on the basis of the malfunction parameters, clearing data are transmitted to a clearing module of the electronic switching device (11), said clearing data including charging data for activating the second emergency intervention system (12), and said clearing data being associated with the first emergency intervention system (10).

8. Method according to Claim 7, **characterized in that** by means of the clearing module, the second emergency intervention system (12) is enabled for activation only after the clearing data are received.

9. Method according to one of Claims 1 to 8, **characterized in that** by means of the generated activation signals, electronically signed charging vouchers are transmitted via the electronic switching device (11).

10. Electronic switching device (11) for switching two autonomous emergency intervention systems (10,12) for automated correction of malfunctions of systems which are arranged in a decentralised manner, wherein by means of sensors (301,302,303,304) of a system, a malfunction event of the system can be detected, and wherein, on the basis of transmitted malfunction parameters, by means of the first emergency intervention system (10), dedicated Intervention means (101,...,105) can be selected and activated specifically to the operation and malfunction, by means of which intervention means (101,...,105) the malfunction of the system can be corrected, **characterized in that**
the electronic switching device (11) is connected bidirectionally to the first and second autonomous emergency intervention systems (10,12), switching signal parameters (111) being synchronisable by means of the switching device (11) between the first emergency intervention system (10) and the second emergency intervention system (12), said switching signal parameters (111) including at least one first synchronised signal threshold parameter (1111) and one second synchronised signal threshold parameter (1112), and the first synchronised signal threshold parameters (1111) of the switching signal parameters (111) being generatable in synchronised form by means of the electronic switching device (11) on the basis of malfunction parameters and/or activation parameters which are stored in a history module (40) and temporally coupled,
the electronic switching device (11) includes an incrementable stack memory (112) with a protected memory module (115), multiple systems (30) being associated with the incrementable stack memory (114), the system being able to transmit predetermined activation parameters periodically via a network (50) by means of an interface module (117) of the electronic switching device (11), and the stack memory (114) being incrementable in steps on the basis of the transmitted activation parameters,
the electronic switching device (11) includes a switching module (116) to enable the first emergency intervention system (10), and by means of the switching module (116), a stack memory level value of the stack memory (114) can be captured, and the first emergency intervention system (10) for automated malfunction correction can be enabled by means of dedicated activation signals of a first activation device (112) if the stack memory level value reaches a defined memory threshold, at least parts of said stack memory (114) being assigned to the second emergency intervention system (12) by means of the switching device (11), on the basis of the synchronised switching signal parameters (111),
the electronic switching device (11) includes a filter module (120) with a malfunction memory module (118) and a malfunction stack memory (119) to decrement a predefined malfunction stack memory value on the basis of the dedicated activation signals, which are quantitatively weighted corresponding to the malfunction parameters by means of the first emergency intervention system (10) on the basis of activation of the intervention means (40),
when the first synchronised signal threshold parameter is reached by the malfunction stack memory value of the malfunction stack memory (119), the enabling of the first emergency intervention system (10) is interrupted by means of the first activation device (112) of the electronic switching device (11), and the second emergency intervention system (12) is enabled by means of the second activation device (113) of the electronic switching device (11), and
when the second synchronised signal threshold parameter is reached by the malfunction stack memory value, the enabling of the second emergency intervention system (10) is interrupted by means of the second activation device (113) of the electronic switching device (11), and the first emergency intervention system (12) is enabled for malfunction correction by means of the first activation device (112).

11. Electronic switching device (11) according to Claim 10, **characterized in that** the first and/or second activation device (112/113) for activation includes means for generating at least one electronic activation signal on the basis of the transmitted malfunction parameters, and means for transmitting the activation signal to the Intervention means (101,...,105).

12. Electronic switching device (11) according to one of Claims 10 or 11, **characterized in that** second synchronised signal threshold parameters (1112) of the switching signal parameters (111) can be generated in synchronised form by means of the electronic switching device (11) on the basis of malfunction parameters and/or activation parameters which are stored in a history module (40) and temporally coupled.

13. Electronic switching device (11) according to one of Claims 10 to 12, **characterized in that** the activation parameters additionally include storable and protected data tokens with money amount values.

14. Electronic switching device (11) according to Claim 13, **characterized in that** the data token is encrypted and/or electronically signed.

15. Electronic switching device (11) according to Claim 14, **characterized in that** the encryption is implemented by means of Public Key Cryptography and/or SSL (Secure Sockets Layer) and/or HTTPS.

16. Electronic switching device (11) according to one of Claims 10 to 15, **characterized in that** the electronic switching device (11) includes a clearing module, and on the basis of the malfunction parameters, clearing data can be transmitted to the clearing module, said clearing data including charging data for activating the second emergency intervention system (12), and said clearing data being associated with the first emergency intervention system (10).

17. Electronic switching device (11) according to Claim 16, **characterized in that** by means of the clearing module, the second emergency intervention system (12) can be enabled for activation only after the clearing data are received.

18. Electronic switching device (11) according to one of Claims 10 to 17, **characterized in that** the activation signals include electronically signed charging vouchers, which can be transmitted via the electronic switching device (11).

19. Electronic switching device (11) according to one of Claims 10 to 18, **characterized in that** the sensors (301,302,303,304) include at least smoke and/or heat and/or humidity and/or movement and/or sound sensors.

20. Electronic switching device (11) according to one of Claims 10 to 19, **characterized in that** the sensors (301,302,303,304) include at least one scan unit with an image recognition module.

## Revendications

1. Procédé pour la commutation électronique (11) de deux systèmes d'intervention d'urgence autonomes (10, 12) pour la correction automatique de dysfonctionnements de systèmes qui sont disposés d'une manière décentralisée, dans lequel, au moyen de capteurs (301, 302, 303, 304) d'un système, un événement de dysfonctionnement du système est détecté, et dans lequel, en fonction de paramètres de dysfonctionnement transmis, au moyen du premier système d'intervention d'urgence (10), des moyens d'intervention dédiés (101,...,105) sont choisis et activés spécifiquement pour le fonctionnement et le dysfonctionnement, au moyen desquels moyens d'intervention (101,...,105) le dysfonctionnement du système est corrigé, **caractérisé par le fait que**
le dispositif de commutation électronique (11) est connecté de manière bidirectionnelle aux premier et second systèmes d'intervention d'urgence autonomes (10, 12), des paramètres de signal de commutation (111) étant synchronisés au moyen du dispositif de commutation (11) entre le premier système d'intervention d'urgence (10) et le second système d'intervention d'urgence (12), lesdits paramètres de signal de commutation (111) comprenant au moins un premier paramètre de seuil de signal synchronisé (1111) et un second paramètre de seuil de signal synchronisé (1112), et les premiers paramètres de seuil de signal synchronisé (1111) des paramètres de signal de commutation (111) étant générés sous forme synchronisée au moyen du dispositif de commutation électronique (11) en fonction de paramètres de dysfonctionnement et/ou de paramètres d'activation qui sont stockés dans un module d'historique (40) et couplés temporellement,
de multiples systèmes (30) sont associés à une mémoire en pile incrémentable (114) d'un module de mémoire protégée (115) du dispositif de commutation électronique (11), des paramètres d'activation prédéterminés étant transmis périodiquement par le système par l'intermédiaire d'un réseau (50) au moyen d'un module d'interface (117) du dispositif de commutation électronique (11), et la mémoire en pile (114) étant incrémentée par étapes en fonction des paramètres d'activation transmis,
au moyen d'un module de commutation (116) du dispositif de commutation électronique (11), une valeur de niveau de mémoire en pile de la mémoire en pile (114) est capturée et le premier système d'intervention d'urgence (10) pour la correction de dysfonctionnement automatique est activé au moyen de signaux d'activation dédiés du module de commutation (116) si la valeur de niveau de mémoire en pile atteint un seuil de mémoire défini, au moins des parties de la mémoire en pile (114) étant attribuées au second système d'intervention d'urgence (12) au moyen du dispositif de commutation (11), en fonction des paramètres de signal de commutation synchronisés (111),
au moyen d'un module de filtre (120) comprenant un module de mémoire de dysfonctionnement (118) et une mémoire en pile de dysfonctionnement (119) du dispositif de commutation électronique (11), une valeur de mémoire en pile de dysfonctionnement prédéfinie est décrémentée en fonction des signaux d'activation dédiés, qui sont générés avec une pondération quantitative correspondant aux paramètres de dysfonctionnement au moyen du premier système d'intervention d'urgence (10) en fonction de l'activation des moyens d'intervention (40),
lorsque le premier paramètre de seuil de signal synchronisé (1111) est atteint par la valeur de mémoire en pile de dysfonctionnement de la mémoire en pile de dysfonctionnement (119), l'activation du premier système d'intervention d'urgence (10) est interrompue au moyen du premier dispositif d'activation (112) du dispositif de commutation électronique (11), et le second système d'intervention d'urgence (12) est activé au moyen du second dispositif d'activation (113) du dispositif de commutation électronique (11), et
lorsque le second paramètre de seuil de signal synchronisé (1112) est atteint par la valeur de mémoire en pile de dysfonctionnement, l'activation du second système d'intervention d'urgence (12) est interrompue au moyen du second dispositif d'activation (113) du dispositif de commutation électronique (11), et le premier système d'intervention d'urgence (10) est activé pour la correction de dysfonctionnement au moyen du premier dispositif d'activation (112).

2. Procédé selon la revendication 1, **caractérisé par le fait qu'**au moyen du premier et/ou du second dispositif d'activation (112/113) pour l'activation, au moins un signal d'activation électronique est généré en fonction des paramètres de dysfonctionnement transmis, et le signal d'activation est transmis aux moyens d'intervention (101,..., 105) et/ou aux dispositifs d'intervention d'urgence (10/12).

3. Procédé selon l'une des revendications 1 ou 2, **caractérisé par le fait que** des seconds paramètres de seuil de signal synchronisés (1112) des paramètres de signal de commutation (111) sont générés sous forme synchronisée au moyen du dispositif de commutation électronique (11) en fonction de paramètres de dysfonctionnement et/ou de paramètres d'activation qui sont stockés dans un module d'historique (40) et couplés temporellement.

4. Procédé selon l'une des revendications 1 à 3, **caractérisé par le fait que** les paramètres d'activation comprennent en outre des jetons de données protégés et pouvant être stockés avec des valeurs de somme d'argent.

5. Procédé selon la revendication 4, **caractérisé par le fait que** le jeton de données est généré sous forme cryptée et/ou signée électroniquement.

6. Procédé selon la revendication 5, **caractérisé par le fait que** le cryptage est mis en oeuvre au moyen d'une Cryptographie à Clé Publique et/ou d'une SSL (Couche d'Echanges Sécurisée) et/ou d'un HTTPS.

7. Procédé selon l'une des revendications 1 à 6, **caractérisé par le fait qu'**en fonction des paramètres de dysfonctionnement, des données d'écrasement sont transmises à un module d'écrasement du dispositif de commutation électronique (11), lesdites données d'écrasement comprenant des données de chargement pour l'activation du second système d'intervention d'urgence (12) et lesdites données d'écrasement étant associées au premier système d'intervention d'urgence (10).

8. Procédé selon la revendication 7, **caractérisé par le fait qu'**au moyen du module d'écrasement, le second système d'intervention d'urgence (12) est activé pour l'activation seulement une fois que les données d'écrasement sont reçues.

9. Procédé selon l'une des revendications 1 à 8, **caractérisé par le fait qu'**au moyen des signaux d'activation générés, des justificatifs de chargement signés électroniquement sont transmis par l'intermédiaire du dispositif de commutation électronique (11).

10. Dispositif de commutation électronique (11) pour la commutation de deux systèmes d'intervention d'urgence autonomes (10, 12) pour la correction automatique de dysfonctionnements de systèmes qui sont disposés d'une manière décentralisée, dans lequel au moyen de capteurs (301, 302, 303, 304) d'un système, un événement de dysfonctionnement du système peut être détecté, et dans lequel, en fonction de paramètres de dysfonctionnement transmis, au moyen du premier système d'intervention d'urgence (10), des moyens d'intervention dédiés (101,..., 105) peuvent être choisis et activés spécifiquement pour le fonctionnement et le dysfonctionnement, au moyen desquels moyens d'intervention (101,...,105) le dysfonctionnement du système peut être corrigé, **caractérisé par le fait que**
le dispositif de commutation électronique (11) est connecté de manière bidirectionnelle aux premier et second systèmes d'intervention d'urgence autonomes (10, 12), des paramètres de signal de commutation (111) étant synchronisables au moyen du dispositif de commutation (11) entre le premier système d'intervention d'urgence (10) et le second système d'intervention d'urgence (12), lesdits paramètres de signal de commutation (111) comprenant au moins un premier paramètre de seuil de signal synchronisé (1111) et un second paramètre de seuil de signal synchronisé (1112), et les premiers paramètres de seuil de signal synchronisés (1111) des paramètres de signal de commutation (111) pouvant être générés sous forme synchronisée au moyen du dispositif de commutation électronique (11) en fonction de paramètres de dysfonctionnement et/ou de paramètres d'activation qui sont stockés dans un module d'historique (40) et couplés temporellement,
le dispositif de commutation électronique (11) comprend une mémoire en pile incrémentable (112) avec un module de mémoire protégée (115), de multiples systèmes (30) étant associés à la mémoire en pile incrémentable (114), le système étant apte à transmettre périodiquement des paramètres d'activation prédéterminés par l'intermédiaire d'un réseau (50) au moyen d'un module d'interface (117) du dispositif de commutation électronique (11), et la mémoire en pile (114) étant incrémentable par étapes en fonction des paramètres d'activation transmis,
le dispositif de commutation électronique (11) comprend un module de commutation (116) pour activer le premier système d'intervention d'urgence (10), et au moyen du module de commutation (116), une valeur de niveau de mémoire en pile de la mémoire en pile (114) peut être capturée, et le premier système d'intervention d'urgence (10) pour la correction de dysfonctionnement automatique peut être activé au moyen de signaux d'activation dédiés d'un premier dispositif d'activation (112) si la valeur de niveau de mémoire en pile atteint un seuil de mémoire défini, au moins des parties de ladite mémoire en pile (114) étant attribuées au second système d'intervention d'urgence (12) au moyen du dispositif de commutation (11), en fonction des paramètres de signal de commutation synchronisés (111),
le dispositif de commutation électronique (11) comprend un module de filtre (120) avec un module de mémoire de dysfonctionnement (118) et une mémoire en pile de dysfonctionnement (119) pour décrémenter une valeur de mémoire en pile de dysfonctionnement prédéfinie en fonction des signaux d'activation dédiés, qui sont pondérés quantitativement en correspondance avec les paramètres de dysfonctionnement au moyen du premier système d'intervention d'urgence (10) en fonction de l'activation des moyens d'intervention (40),
lorsque le premier paramètre de seuil de signal synchronisé est atteint par la valeur de mémoire en pile de dysfonctionnement de la mémoire en pile de dysfonctionnement (119), l'activation du premier système d'intervention d'urgence (10) est interrompue au moyen du premier dispositif d'activation (112) du dispositif de commutation électronique (11), et le second système d'intervention d'urgence (12) est activé au moyen du second dispositif d'activation (113) du dispositif de commutation électronique (11), et
lorsque le second paramètre de seuil de signal synchronisé est atteint par la valeur de mémoire en pile de dysfonctionnement, l'activation du second système d'intervention d'urgence (10) est interrompue au moyen du second dispositif d'activation (113) du dispositif de commutation électronique (11), et le premier système d'intervention d'urgence (12) est activé pour la correction de dysfonctionnement au moyen du premier dispositif d'activation (112).

11. Dispositif de commutation électronique (11) selon la revendication 10, **caractérisé par le fait que** le premier et/ou le second dispositif d'activation (112/113) pour l'activation comprend des moyens pour générer au moins un signal d'activation électronique en fonction des paramètres de dysfonctionnement transmis, et des moyens pour transmettre le signal d'activation aux moyens d'intervention (101,...,105).

12. Dispositif de commutation électronique (11) selon l'une des revendications 10 ou 11, **caractérisé par le fait que** des seconds paramètres de seuil de signal synchronisés (1112) des paramètres de signal de commutation (111) peuvent être générés sous forme synchronisée au moyen du dispositif de commutation électronique (11) en fonction de paramètres de dysfonctionnement et/ou de paramètres d'activation qui sont stockés dans un module d'historique (40) et couplés temporellement.

13. Dispositif de commutation électronique (11) selon l'une des revendications 10 à 12, **caractérisé par le fait que** les paramètres d'activation comprennent en outre des jetons de données protégés et pouvant être stockés avec des valeurs de somme d'argent.

14. Dispositif de commutation électronique (11) selon la revendication 13, **caractérisé par le fait que** le jeton de données est crypté et/ou signé électroniquement.

15. Dispositif de commutation électronique (11) selon la revendication 14, **caractérisé par le fait que** le cryptage est mis en oeuvre au moyen d'une Cryptographie à Clé Publique et/ou d'une SSL (Couche d'Echanges Sécurisée) et/ou d'un HTTPS.

16. Dispositif de commutation électronique (11) selon l'une des revendications 10 à 15, **caractérisé par le fait que** le dispositif de commutation électronique (11) comprend un module d'écrasement, et, en fonction des paramètres de dysfonctionnement, les données d'écrasement peuvent être transmises au module d'écrasement, lesdites données d'écrasement comprenant des données de chargement pour l'activation du second système d'intervention d'urgence (12) et lesdites données d'écrasement étant associées au premier système d'intervention d'urgence (10).

17. Dispositif de commutation électronique (11) selon la revendication 16, **caractérisé par le fait qu'**au moyen du module d'écrasement, le second système d'intervention d'urgence (12) peut être activé pour l'activation seulement une fois que les données d'écrasement sont reçues (10).

18. Dispositif de commutation électronique (11) selon l'une des revendications 10 à 17, **caractérisé par le fait que** les signaux d'activation comprennent des justificatifs de chargement signés électroniquement, qui peuvent être transmis par l'intermédiaire du dispositif de commutation électronique (11).

19. Dispositif de commutation électronique (11) selon l'une des revendications 10 à 18, **caractérisé par le fait que** les capteurs (301, 302, 303, 304) comprennent au moins des capteurs de fumée et/ou de chaleur et/ou d'humidité et/ou de mouvement et/ou de son.

20. Dispositif de commutation électronique (11) selon l'une des revendications 10 à 19, **caractérisé par le fait que** les capteurs (301, 302, 303, 304) comprennent au moins une unité de balayage avec un module de reconnaissance d'image.
